(19) **Europäisches Patentamt**

**European Patent Office**

**Office européen des brevets**

(11) **EP 1 114 069 B1**

(12) **EUROPEAN PATENT SPECIFICATION**

(45) Date of publication and mention
of the grant of the patent:
**30.07.2003 Bulletin 2003/31**

(51) Int Cl.[7]: **C08F 10/00**, C08F 4/64

(21) Application number: **00926041.5**

(86) International application number:
**PCT/US00/10248**

(22) Date of filing: **18.04.2000**

(87) International publication number:
**WO 00/075198 (14.12.2000 Gazette 2000/50)**

(54) **A METHOD FOR PREPARING A SUPPORTED CATALYST SYSTEM AND ITS USE IN A POLYMERIZATION PROCESS**

EIN VERFAHREN ZUR HERSTELLUNG EINES GETRÄGERTEN KATALYSATORS UND DESSEN VERWENDUNG IN EINEM POLYMERISATIONSVERFAHREN

PROCEDE DE PREPARATION D'UN SYSTEME CATALYSEUR SUPPORTE ET SON UTILISATION DANS LE PROCESSUS DE POLYMERISATION

(84) Designated Contracting States:
**AT BE CH CY DE DK ES FI FR GB GR IE IT LI LU MC NL PT SE**

(30) Priority: **03.06.1999 US 325172**

(43) Date of publication of application:
**11.07.2001 Bulletin 2001/28**

(73) Proprietor: **Univation Technologies LLC Houston, TX 77056 (US)**

(72) Inventors:
• **KAO, Sun-Chueh Belle Mead, NJ 08502 (US)**
• **KAROL, Frederick, J. Lakewood, NJ 08701 (US)**

(74) Representative:
**Ricker, Mathias, Dr.Dipl.-Chem. et al Patent- und Rechtsanwälte Bardehle . Pagenberg . Dost . Altenburg . Geissler Galileiplatz 1 81679 München (DE)**

(56) References cited:
**US-A- 4 701 432          US-A- 5 767 032**

**Description**

## FIELD OF THE INVENTION

The present invention relates to a method for preparing a supported catalyst system and for its use in a process for polymerizing olefin(s). In particular, the invention is directed to a method for preparing a supported bulky ligand metallocene-type catalyst system.

## BACKGROUND OF THE INVENTION

Advances in polymerization and catalysis have resulted in the capability to produce many new polymers having improved physical and chemical properties useful in a wide variety of superior products and applications. With the development of new catalysts the choice of polymerization-type (solution, slurry, high pressure or gas phase) for producing a particular polymer has been greatly expanded. Also, advances in polymerization technology have provided more efficient, highly productive and economically enhanced processes. Especially illustrative of these advances is the development of technology utilizing bulky ligand metallocene-type catalyst systems. In particular, in a slurry or gas phase process where typically a supported catalyst system is used, there are a variety of different methods described in the art for supporting bulky ligand metallocene-type catalyst systems.

Illustrative methods for producing supported bulky ligand metallocene-type catalyst systems include: U.S. Patent No. 5,332,706 and 5,473,028 have resorted to a particular technique for forming a catalyst by incipient impregnation; U.S. Patent Nos. 5,427,991 and 5,643,847 describe the chemical bonding of non-coordinating anionic activators to supports; U.S. Patent No. 5,492,975 discusses polymer bound metallocene-type catalyst systems; PCT publication WO 97/06186 published February 20, 1997 teaches removing inorganic and organic impurities after formation of the metallocene-type catalyst itself; PCT publication WO 97/15602 published May 1, 1997 discusses readily supportable metal complexes; U.S. Patent No. 4,937,217 generally describes a mixture of trimethylaluminum and triethylaluminum added to an undehydrated silica then adding a metallocene catalyst; EP-308177-B1 generally describes adding a wet monomer to a reactor containing a metallocene, trialkylaluminum and undehydrated silica; U.S. Patent Nos. 4,912,075, 4,935,397 and 4,937,301 generally relate to adding trimethylaluminum to an undehydrated silica and then adding a metallocene to form a dry supported catalyst; U.S. Patent No. 4,914,253 describes adding trimethylaluminum to undehydrated silica, adding a metallocene and then drying the catalyst with an amount of hydrogen to produce polyethylene wax; U.S. Patent Nos. 5,008,228, 5,086,025 and 5,147,949 generally describe forming a dry supported catalyst by the addition of trimethylaluminum to a water impregnated silica to form alumoxane in situ and then adding the metallocene; U.S. Patent Nos. 4,808,561, 4,897,455 and 4,701,432 describe techniques to form a supported catalyst where the inert carrier, typically silica, is calcined and contacted with a metallocene(s) and a activator/cocatalyst component; U.S. Patent No. 5,238,892 describes forming a dry supported catalyst by mixing a metallocene with an alkyl aluminum then adding undehydrated silica; and U.S. Patent No. 5,240,894 generally pertains to forming a supported metallocene/alumoxane catalyst system by forming a metallocene/alumoxane reaction solution, adding a porous carrier, and evaporating the resulting slurry to remove residual solvent from the carrier.

While all these methods have been described in the art, a need for an improved method for preparing supported bulky-ligand metallocene-type catalysts has been discovered.

## SUMMARY OF THE INVENTION

This invention provides a method of making a new and improved supported bulky ligand metallocene-type catalyst system and for its use in a polymerizing process.

In one embodiment, the method consists of the steps (a) forming a supported bulky ligand metallocene-catalyst system comprising a first bulky ligand metallocene-type catalyst compound, a support or carrier and an activator, (b) adding a second bulky ligand metallocene-type catalyst compound in a liquid to the supported bulky ligand metallocene-catalyst system of step (a).

In another aspect, the invention is directed to a method for making a supported catalyst system consisting of the steps (a) combining a first bulky ligand metallocene-type catalyst compound, an activator and a support material, and then (b) adding a second bulky ligand metallocene-type catalyst compound in a liquid.

In another embodiment, the invention is directed to a process for polymerizing olefin(s), particularly in a gas phase or slurry phase process, utilizing a supported catalyst composition consisting of a supported metallocene-type catalyst system that has been contacted prior to entering a reactor with a second bulky ligand metallocene-type catalyst compound in a liquid.

## DETAILED DESCRIPTION OF THE INVENTION

### Introduction

The invention is directed toward a method for making a supported catalyst system. It has been surprisingly discovered that in essence, dipping an already formed supported bulky ligand metallocene-type catalyst system in an bulky ligand metallocene-type catalyst compound solution results in an increase in the activity of the combined supported catalyst composition. Further, the method of the invention provides for a reduction in the overall amount of activator necessary to ascertain high catalyst productivities. While not wishing to be bound to any particular theory it is believed that this invention provides ways to increase the number of catalytically active sites through more proficient use of the activator.

### Bulky Ligand Metallocene-Type Catalyst Compounds

Generally, bulky ligand metallocene-type catalyst compounds include half and full sandwich compounds having one or more bulky ligands bonded to at least one metal atom. Typical bulky ligand metallocene-type compounds are generally described as containing one or more bulky ligand(s) and one or more leaving group(s) bonded to at least one metal atom. In one preferred embodiment, at least one bulky ligand is $\eta$-bonded to the metal atom, most preferably $\eta^5$-bonded to the metal atom.

The bulky ligands are represented by one or more open, acyclic, or fused ring(s) or ring system(s) or a combination thereof. These bulky ligands, preferably the ring(s) or ring system(s) are typically composed of atoms selected from Groups 13 to 16 atoms of the Periodic Table of Elements, preferably the atoms are selected from the group consisting of carbon, nitrogen, oxygen, silicon, sulfur, phosphorous, germanium, boron and aluminum or a combination thereof. Most preferably the ring(s) or ring system(s) are composed of carbon atoms such as but riot limited to those cyclopentadienyl ligands or cyclopentadienyl-type ligand structures or other similar functioning ligand structure such as a pentadiene, a cyclooctatetraendiyl or an imide ligand. The metal atom is preferably selected from Groups 3 through 15 and the lanthanide or actinide series of the Periodic Table of Elements. Preferably the metal is a transition metal from Groups 4 through 12, more preferably Groups 4, 5 and 6, and most preferably the transition metal is from Group 4.

In one embodiment, the bulky ligand metallocene-type catalyst compounds of the invention are represented by the formula:

$$L^A L^B M Q_n \qquad \text{(I)}$$

where M is a metal atom from the Periodic Table of the Elements and may be a Group 3 to 12 metal or from the lanthanide or actinide series of the Periodic Table of Elements, preferably M is a Group 4, 5 or 6 transition metal, more preferably M is a Group 4 transition metal, even more preferably M is zirconium, hafnium or titanium. The bulky ligands, $L^A$ and $L^B$, are open, acyclic or fused ring(s) or ring system(s) such as unsubstituted or substituted, cyclopentadienyl ligands or cyclopentadienyl-type ligands, heteroatom substituted and/or heteroatom containing cyclopentadienyl-type ligands. Non-limiting examples of bulky ligands include cyclopentadienyl ligands, cyclopentaphenanthreneyl ligands, indenyl ligands, benzindenyl ligands, fluorenyl ligands, octahydrofluorenyl ligands, cyclooctatetraendiyl ligands, cyclopentacyclododecene ligands, azenyl ligands, azulene ligands, pentalene ligands, phosphoyl ligands, pyrrolyl ligands, pyrozolyl ligands, carbazolyl ligands, borabenzene ligands, including hydrogenated versions thereof, for example tetrahydroindenyl ligands. In one embodiment, $L^A$ and $L^B$ may be any other ligand structure capable of $\eta$-bonding to M, preferably $\eta^3$-bonding to M and most preferably $\eta^5$-bonding. In yet another embodiment, the atomic molecular weight (MW) of $L^A$ or $L^B$ exceeds 60 a.m.u., preferably greater than 65 a.m.u.. In another embodiment, $L^A$ and $L^B$ may comprise one or more heteroatoms, for example, nitrogen, silicon, boron, germanium, sulfur and phosphorous, in combination with carbon atoms to form an open, acyclic, or preferably a fused, ring or ring system, for example, a hetero-cyclopentadienyl ancillary ligand. Other $L^A$ and $L^B$ bulky ligands include but are not limited to bulky amides, phosphides, alkoxides, aryloxides, imides, carbolides, borollides, porphyrins, phthalocyanines, corrins and other polyazomacrocycles. Independently, each $L^A$ and $L^B$ may be the same or different type of bulky ligand that is bonded to M. In one embodiment of formula (I) only one of either $L^A$ or $L^B$ is present.

Independently, each $L^A$ and $L^B$ may be unsubstituted or substituted with a combination of substituent groups R. Non-limiting examples of substituent groups R include one or more from the group selected from hydrogen, or linear, branched alkyl radicals, or alkenyl radicals, alkynyl radicals, cycloalkyl radicals or aryl radicals, acyl radicals, aroyl radicals, alkoxy radicals, aryloxy radicals, alkylthio radicals, dialkylamino radicals, alkoxycarbonyl radicals, aryloxycarbonyl radicals, carbomoyl radicals, alkyl- or dialkyl- carbamoyl radicals, acyloxy radicals, acylamino radicals, aroylamino radicals, straight, branched or cyclic, alkylene radicals, or combination thereof. In a preferred embodiment, substituent groups R have up to 50 non-hydrogen atoms, preferably from 1 to 30 carbon, that can also be substituted with halogens or heteroatoms. Non-limiting examples of alkyl substituents R include methyl, ethyl, propyl, butyl, pentyl, hexyl, cyclopentyl, cyclohexyl, benzyl or phenyl groups, including all their isomers, for example tertiary butyl, isopropyl. Other hydrocarbyl radicals include fluoromethyl, fluoroethyl, difluoroethyl, iodopropyl, bromohexyl, chlorobenzyl and hydrocarbyl substituted organometalloid radicals including trimethylsilyl, trimethylgermyl, methyldiethylsilyl; and halocarbyl-substituted organometalloid radicals including tris(trifluoromethyl)-silyl, methyl-bis(difluoromethyl)silyl, bromomethyldimethylgermyl ; and disubstitiuted boron radicals including dimethylboron for example; and disubstituted pnictogen radicals including dimethylamine, dimethylphosphine, diphenylamine, methylphenylphosphine, chalcogen radicals including methoxy, ethoxy, propoxy, phenoxy, methylsulfide and ethylsulfide. Non-hydrogen substituents R include the atoms carbon, silicon, boron, aluminum, nitrogen, phosphorous, oxygen, tin, sulfur, germanium, including olefins such as but not limited to olefinically unsaturated substituents including vinyl-terminated ligands, for example but-3-enyl, prop-2-enyl, hex-5-enyl. Also, at least two R groups, preferably two adjacent R groups, are joined to form a ring structure having from 3 to 30 atoms selected from carbon, nitrogen, oxygen, phosphorous, silicon, germanium, aluminum, boron or a combination thereof. Also, a substituent group R such as 1-butanyl may form a carbon sigma bond to the metal M.

Other ligands may be bonded to the metal M, such as at least one leaving group Q. For the purposes of this patent specification and appended claims the term "leaving group" is any ligand that can be abstracted from a bulky ligand metallocene-type catalyst compound to form a bulky ligand metallocene-type catalyst cation capable of polymerizing one or more olefin(s). In one embodiment, Q is a monoanionic labile ligand having a sigma-bond to M. Depending on the oxidation state of the metal, the value for n is 0, or 2 such that formula (I) above represents a neutral bulky ligand metallocene-type catalyst compound.

Non-limiting examples of Q ligands include weak bases such as amines, phosphines, ethers, carboxylates, dienes, hydrocarbyl radicals having from 1 to 20 carbon atoms, hydrides or halogens and the like or a combination thereof. In another embodiment, two or more Q's form a part of a fused ring or ring system. Other examples of Q ligands include those substituents for R as described above and including cyclobutyl, cyclohexyl, heptyl, tolyl, trifluoromethyl, tetramethylene, pentamethylene, methylidene, methyoxy, ethyoxy, propoxy, phenoxy, bis(N-methylanilide), dimethylamide, dimethylphosphide radicals.

In one embodiment, the bulky ligand metallocene-type catalyst compounds of the invention include those of formula (I) where $L^A$ and $L^B$ are bridged to each other by a bridging group, A such the formula is represented by

$$L^A A L^B M Q_n \qquad\qquad (II)$$

These bridged compounds represented by formula (II) are known as bridged, bulky ligand metallocene-type catalyst compounds. $L^A$, $L^B$, M, Q and n are as defined above. Non-limiting examples of bridging group A include bridging groups containing at least one Group 13 to 16 atom, often referred to as a divalent moiety such as but not limited to at least one of a carbon, oxygen, nitrogen, silicon, boron, germanium and tin atom or a combination thereof. Preferably bridging group A contains a carbon, silicon or germanium atom, most preferably A contains at least one silicon atom or at least one carbon atom. The bridging group A may also contain substituent groups R as defined above including halogens. Non-limiting examples of bridging group A may be represented by $R'_2C$, $R'_2Si$, $R'_2Si\ R'_2Si$, $R'_2Ge$, R'P, where R' is independently, a radical group which is hydride, hydrocarbyl, substituted hydrocarbyl, halocarbyl, substituted halocarbyl, hydrocarbyl-substituted organometalloid, halocarbyl-substituted organometalloid, disubstituted boron, disubstituted pnictogen, substituted chalcogen, or halogen or two or more R' may be joined to form a ring or ring system.

In one embodiment, the bulky ligand metallocene-type catalyst compounds are those where the R substituents on the bulky ligands $L^A$ and $L^B$ of formulas (I) and (II) are substituted with the same or different number of substituents on each of the bulky ligands. In another embodiment, the bulky ligands $L^A$ and $L^B$ of formulas (I) and (II) are different from each other.

Other bulky ligand metallocene-type catalyst compounds and catalyst systems useful in the invention may include those described in U.S. Patent Nos. 5,064,802, 5,145,819, 5,149,819, 5,243,001, 5,239,022, 5,276,208, 5,296,434, 5,321,106, 5,329,031, 5,304,614, 5,677,401, 5,723,398, 5,753,578, 5,854,363, 5,856,547 5,858,903, 5,859,158 and 5,900,517 and PCT publications WO 93/08221, WO 93/08199, W0 95/07140, WO 98/11144, WO 98/41530, WO 98/41529, WO 98/46650, WO 99/02540 and WO 99/14221 and European publications EP-A-0 578 838, EP-A-0 638 595, EP-B-0 513 380, EP-A1-0 816 372, EP-A2-0 839 834, EP-B1-0 632 819, EP-B1-0 748 821 and EP-B1-0 757 996.

In one embodiment, bulky ligand metallocene-type catalysts compounds useful in the invention include bridged heteroatom, mono-bulky ligand metallocene-type compounds. These types of catalysts and catalyst systems are described in, for example, PCT publication WO 92/00333, WO 94/07928, WO 91/ 04257, WO 94/03506, WO96/00244, WO 97/15602 and WO 99/20637 and U.S. Patent Nos. 5,057,475, 5,096,867, 5,055,438, 5,198,401, 5,227,440 and 5,264,405 and European publication EP-A-0 420 436.

In this embodiment, the bulky ligand metallocene-type catalyst compound is represented by the formula:

$$L^C AJMQ_n \tag{III}$$

where M is a Group 3 to 16 metal atom or a metal selected from the Group of actinides and lanthanides of the Periodic Table of Elements, preferably M is a Group 4 to 12 transition metal, and more preferably M is a Group 4, 5 or 6 transition metal, and most preferably M is a Group 4 transition metal in any oxidation state, especially titanium; $L^C$ is a substituted or unsubstituted bulky ligand bonded to M; J is bonded to M; A is bonded to M and J; J is a heteroatom ancillary ligand; and A is a bridging group; Q is a univalent anionic ligand; and n is the integer 0,1 or 2. In formula (III) above, $L^C$, A and J form a fused ring system. In an embodiment, $L^C$ of formula (III) is as defined above for $L^A$, A, M and Q of formula (III) are as defined above in formula (I).

In formula (III) J is a heteroatom containing ligand in which J is an element with a coordination number of three from Group 15 or an element with a coordination number of two from Group 16 of the Periodic Table of Elements. Preferably J contains a nitrogen, phosphorus, oxygen or sulfur atom with nitrogen being most preferred.

In another embodiment, the bulky ligand type metallocene-type catalyst compound is a complex of a metal, preferably a transition metal, a bulky ligand, preferably a substituted or unsubstituted pi-bonded ligand, and one or more heteroallyl moieties, such as those described in U.S. Patent Nos. 5,527,752 and 5,747,406 and EP-B1-0 735 057.

In an embodiment, the bulky ligand metallocene-type catalyst compound is represented by the formula:

$$L^D MQ_2(YZ)X_n \tag{IV}$$

where M is a Group 3 to 16 metal, preferably a Group 4 to 12 transition metal, and most preferably a Group 4, 5 or 6 transition metal; $L^D$ is a bulky ligand that is bonded to M; each Q is independently bonded to M and $Q_2(YZ)$ forms a unicharged polydentate ligand; A or Q is a univalent anionic ligand also bonded to M; X is a univalent anionic group when n is 2 or X is a divalent anionic group when n is 1; n is 1 or 2.

In formula (IV), L and M are as defined above for formula (I). Q is as defined above for formula (I), preferably Q is selected from the group consisting of-O-, -NR-, $-CR_2-$ and -S-; Y is either C or S; Z is selected from the group consisting of-OR, $-NR_2$, $-CR_3$, -SR, $-SiR_3$, $-PR_2$, -H, and substituted or unsubstituted aryl groups, with the proviso that when Q is -NR- then Z is selected from one of the group consisting of-OR, -NR2, -SR, $-SiR_3$, $-PR_2$ and -H; R is selected from a group containing carbon, silicon, nitrogen, oxygen, and/or phosphorus, preferably where R is a hydrocarbon group containing from 1 to 20 carbon atoms, most preferably an alkyl, cycloalkyl, or an aryl group; n is an integer from 1 to 4, preferably 1 or 2; X is a univalent anionic group when n is 2 or X is a divalent anionic group when n is 1; preferably X is a carbamate, carboxylate, or other heteroallyl moiety described by the Q, Y and Z combination.

In another embodiment of the invention, the bulky ligand metallocene-type catalyst compounds are heterocyclic ligand complexes where the bulky ligands, the ring(s) or ring system(s), include one or more heteroatoms or a combination thereof. Non-limiting examples of heteroatoms include a Group 13 to 16 element, preferably nitrogen, boron, sulfur, oxygen, aluminum, silicon, phosphorous and tin. Examples of these bulky ligand metallocene-type catalyst compounds are described in WO 96/33202, WO 96/34021, WO 97/17379 and WO 98/22486 and EP-A1-0 874 005 and U.S. Patent No. 5,637,660, 5,539,124, 5,554,775, 5,756,611, 5,233,049, 5,744,417, and 5,856,258.

In another embodiment, the bulky ligand metallocene-type catalyst compounds are those complexes known as transition metal catalysts based on bidentate ligands containing pyridine or quinoline moieties. In another embodiment, the bulky ligand metallocene-type catalyst compounds are those described in PCT publications WO 99/01481 and WO 98/42664.

In one embodiment, the bulky ligand metallocene-type catalyst compound is represented by the formula:

$$((Z)XA_t(YJ))_q MQ_n \tag{V}$$

where M is a metal selected from Group 3 to 13 or lanthanide and actinide series of the Periodic Table of Elements; Q is bonded to M and each Q is a monovalent, bivalent, or trivalent anion; X and Y are bonded to M; one or more of X and Y are heteroatoms, preferably both X and Y are heteroatoms; Y is contained in a heterocyclic ring J, where J comprises from 2 to 50 non-hydrogen atoms, preferably 2 to 30 carbon atoms; Z is bonded to X, where Z comprises 1 to 50 non-hydrogen atoms, preferably 1 to 50 carbon atoms, preferably Z is a cyclic group containing 3 to 50 atoms, preferably 3 to 30 carbon atoms; t is 0 or 1; when t is 1, A is a bridging group joined to at least one of X,Y or J, preferably X and J; q is 1 or 2; n is an integer from 1 to 4 depending on the oxidation state of M. In one embodiment, where X is oxygen or sulfur then Z is optional. In another embodiment, where X is nitrogen or phosphorous then Z is present. In an embodiment, Z is preferably an aryl group, more preferably a substituted aryl group.

## Other Bulky Ligand Metallocene-Type Catalyst Compounds

It is within the scope of this invention, in one embodiment, that the bulky ligand metallocene-type catalyst compounds include complexes of $Ni^{2+}$ and $Pd^{2+}$ described in the articles Johnson, et al., "New Pd(II)- and Ni(II)- Based Catalysts for Polymerization of Ethylene and a-Olefins", J. Am. Chem. Soc. 1995, 117, 6414-6415 and Johnson, et al., "Copolymerization of Ethylene and Propylene with Functionalized Vinyl Monomers by Palladium(II) Catalysts", J. Am. Chem. Soc., 1996, 118, 267-268, and WO 96/23010 published August 1, 1996, WO 99/02472, U.S. Patent Nos. 5,852,145, 5,866,663 and 5,880,241. These complexes can be either dialkyl ether adducts, or alkylated reaction products of the described dihalide complexes that can be activated to a cationic state by the activators of this invention described below.

Also included as bulky ligand metallocene-type catalyst are those diimine based ligands of Group 8 to 10 metal compounds disclosed in PCT publications WO 96/23010 and WO 97/48735 and Gibson, et. al., Chem. Comm., pp. 849-850 (1998).

Other bulky ligand metallocene-type catalysts are those Group 5 and 6 metal imido complexes described in EP-A2-0 816 384 and U.S. Patent No. 5,851,945, which is incorporated herein by reference. In addition, bulky ligand metallocene-type catalysts include bridged bis(arylamido) Group 4 compounds described by D.H. McConville, et al., in Organometallics 1195, 14, 5478-5480. Other bulky ligand metallocene-type catalysts are described as bis(hydroxy aromatic nitrogen ligands) in U.S. Patent No. 5,852,146. Other metallocene-type catalysts containing one or more Group 15 atoms include those described in WO 98/46651. Still another bulky ligand metallocene-type catalysts include those multinuclear bulky ligand metallocene-type catalysts as described in WO 99/20665.

It is also contemplated that in one embodiment, the bulky ligand metallocene-type catalysts of the invention described above include their structural or optical or enantiomeric isomers (meso and racemic isomers for example see U.S. Patent No. 5,852,143 and mixtures thereof.

## Activator and Activation Methods for the Bulky Ligand Metallocene-Type Catalyst Compounds

The above described bulky ligand metallocene-type catalyst compounds are typically activated in various ways to yield catalyst compounds having a vacant coordination site that will coordinate, insert, and polymerize olefin(s).

For the purposes of this patent specification and appended claims, the term "activator" is defined to be any compound or component or method which can activate any of the bulky ligand metallocene-type catalyst compounds of the invention as described above. Non-limiting activators, for example may include a Lewis acid or a non-coordinating ionic activator or ionizing activator or any other compound including Lewis bases, aluminum alkyls, conventional-type cocatalysts and combinations thereof that can convert a neutral bulky ligand metallocene-type catalyst compound to a catalytically active bulky ligand metallocene cation. It is within the scope of this invention to use alumoxane or modified alumoxane as an activator, and/or to also use ionizing activators, neutral or ionic, such as tri (n-butyl) ammonium tetrakis (pentafluorophenyl) boron, a trisperfluorophenyl boron metalloid precursor or a trisperfluoronaphtyl boron metalloid precursor, polyhalogenated heteroborane anions (WO 98/43983) or combination thereof, that would ionize the neutral bulky ligand metallocene-type catalyst compound.

In one embodiment, an activation method using ionizing ionic compounds not containing an active proton but capable of producing both a bulky ligand metallocene-type catalyst cation and a non-coordinating anion are also contemplated, and are described in EP-A- 0 426 637, EP-A- 0 573 403 and U.S. Patent No. 5,387,568.

There are a variety of methods for preparing alumoxane and modified alumoxanes, non-limiting examples of which are described in U.S. Patent No. 4,665,208, 4,952,540, 5,091,352, 5,206,199, 5,204,419, 4,874,734, 4,924,018, 4,908,463, 4,968,827, 5,308,815, 5,329,032, 5,248,801, 5,235,081, 5,157,137, 5,103,031, 5391,793, 5,391,529, 5,693,838, 5,731,253, 5,731,451, 5,744,656, 5,847,177, 5,854,166 and 5,856,256 and European publications EP-A-0 561 476, EP-B1-0 279 586, EP-A-0 594-218 and EP-B1-0 586 665, and PCT publication WO 94/10180.

Organoaluminum compounds include trimethylaluminum, triethylaluminum, triisobutylaluminum, tri-n-hexylaluminum, tri-n-octylaluminum and the like.

Ionizing compounds may contain an active proton, or some other cation associated with but not coordinated to or only loosely coordinated to the remaining ion of the ionizing compound. Such compounds are described in European publications EP-A-0 570 982, EP-A-0 520 732, EP-A-0 495 375, EP-B1-0 500 944, EP-A-0 277 003 and EP-A-0 277 004, and U.S. Patent Nos. 5,153,157. 5.198,401, 5,066,741, 5,206,197, 5,241,025, 5,384,299 and 5,502,124.

Other activators include those described in PCT publication WO 98/07515 such as tris (2, 2', 2"- nonafluorobiphenyl) fluoroaluminate, which publication is fully incorporated herein by reference. Combinations of activators are also contemplated by the invention, for example, alumoxanes and ionizing activators in combinations, see for example, EP-B1 0 573 120, PCT publications WO 94/07928 and WO 95/14044 and U.S. Patent Nos. 5,153,157 and 5,453,410. WO 98/09996 describes activating bulky ligand metallocene-type catalyst compounds with perchlorates, periodates and iodates including their hydrates. WO 98/30602 and WO 98/30603 describe the use of lithium (2,2'-bisphenyl-ditrimethylsilicate)•4THF as an activator for a bulky ligand metallocene-type catalyst compound. WO 99/18135 describes the use of organo-boron-aluminum acitivators. EP-B1-0 781 299 describes using a silylium salt in combination with a non-coordinating compatible anion. Also, methods of activation such as using radiation (see EP-B1-0 615 981), electrochemical oxidation, and the like are also contemplated as activating methods for the purposes of rendering the neutral bulky ligand metallocene-type catalyst compound or precursor to a bulky ligand metallocene-type cation capable of polymerizing olefins. Other activators or methods for activating a bulky ligand metallocene-type catalyst compound are described in for example, U.S. Patent Nos. 5,849,852, 5,859,653 and 5,869,723 and PCT publication WO 98/32775.

It is also within the scope of this invention that the above described bulky ligand metallocene-type catalyst compounds can be combined with one or more of the catalyst compounds represented by formulas (I) through (V) with one or more activators or activation methods described above.

It is further contemplated by the invention that other catalysts can be combined with the bulky ligand metallocene-type catalyst compounds of the invention. For example, see U.S. Patent Nos. 4,937,299, 4,935,474, 5,281,679, 5,359,015, 5,470,811, and 5,719,241. It is also contemplated that any one of the bulky ligand metallocene-type catalyst compounds of the invention have at least one fluoride or fluorine containing leaving group.

In another embodiment of the invention one or more bulky ligand metallocene-type catalyst compounds or catalyst systems may be used in combination with one or more conventional-type catalyst compounds or catalyst systems. Non-limiting examples of mixed catalysts and catalyst systems are described in U.S. Patent Nos. 4,159,965, 4,325,837, 4,701,432, 5,124,418, 5,077,255, 5,183,867, 5,391,660, 5,395,810, 5,691,264, 5,723,399 and 5,767,031 and PCT Publication WO 96/23010 published August 1, 1996.

## Supports, Carriers and General Supporting Techniques

The above described bulky ligand metallocene-type catalyst compounds and catalyst systems may be combined with one or more support materials or carriers using one of the support methods well known in the art or as described below. For example, in a most preferred embodiment, a bulky ligand metallocene-type catalyst compound or catalyst system is in a supported form, for example deposited on, contacted with, or incorporated within, adsorbed or absorbed in, or on, a support or carrier.

The terms "support" or "carrier" are used interchangeably and are any support material, preferably a porous support material, for example, talc, inorganic oxides and inorganic chlorides. Other carriers include resinous support materials such as polystyrene, functionalized or crosslinked organic supports, such as polystyrene divinyl benzene polyolefins or polymeric compounds, zeolites, clays, or any other organic or inorganic support material, or mixtures thereof.

The preferred carriers are inorganic oxides that include those Group 2, 3, 4, 5, 13 or 14 metal oxides. The preferred supports include silica, alumina, silica-alumina, magnesium chloride, and mixtures thereof. Other useful supports include magnesia, titania, zirconia, montmorillonite (EP-B 1 0 511 665). Also, combinations of these support materials may be used, for example, silica-chromium, silica-alumina, silica-titania.

It is preferred that the carrier, most preferably an inorganic oxide, has a surface area in the range of from about 10 to about 700 $m^2$/g, pore volume in the range of from about 0.1 to about 4.0 cc/g and average particle size in the range of from about 5 to about 500 μm. More preferably, the surface area of the carrier is in the range of from about 50 to about 500 $m^2$/g, pore volume of from about 0.5 to about 3.5 cc/g and average particle size of from about 10 to about 200 μm. Most preferably the surface area of the carrier is in the range is from about 100 to about 400 $m^2$/g, pore volume from about 0.8 to about 3.0 cc/g and average particle size is from about 5 to about 100 μm. The average pore size of the carrier of the invention typically has pore size in the range of from 10 to 1000Å, preferably 50 to about 500Å, and most preferably 75 to about 350Å.

Examples of supporting the bulky ligand metallocene-type catalyst systems of the invention are described in U.S. Patent Nos. 4,701,432, 4,808,561, 4,912,075, 4,925,821, 4,937,217, 5,008,228, 5,238,892, 5,240,894, 5,332,706, 5,346,925, 5,422,325, 5,466,649, 5,466,766, 5,468,702, 5,529,965, 5,554,704, 5,629,253, 5,639,835, 5,625,015, 5,643,847, 5,665,665, 5,698,487, 5,714,424, 5,723,400, 5,723,402, 5,731,261, 5,759,940, 5,767,032, 5,770,664 and 5,846,895 and PCT publications WO 95/32995, WO 95/14044, WO 96/06187 and WO 97/02297, and EP-B1-0 685 494.

There are various other methods in the art for supporting a polymerization catalyst compound or catalyst system of the invention. For example, the bulky ligand metallocene-type catalyst compound of the invention may contain a polymer bound ligand as described in U.S. Patent Nos. 5,473,202 and 5,770,755; the bulky ligand metallocene-type catalyst system of the invention may be spray dried as described in U.S. Patent No. 5,648,310; the support used with the bulky ligand metallocene-type catalyst system of the invention is functionalized as described in European publication EP-A-0 802 203 or at least one substituent or leaving group is selected as described in U.S. Patent No. 5,688,880.

In a preferred embodiment, the invention provides for a supported bulky ligand metallocene-type catalyst system that includes an antistatic agent or surface modifier that is used in the preparation of the supported catalyst system as described in PCT publication WO 96/11960. The catalyst systems of the invention can be prepared in the presence of an olefin, for example hexene-1.

In another embodiment, the bulky ligand metallocene-type catalyst system can be combined with a carboxylic acid salt of a metal ester, for example aluminum carboxylates such as aluminum mono, di- and tri- stearates, aluminum octoates, oleates and cyclohexylbutyrates.

A preferred method for producing the supported bulky ligand metallocene-type catalyst system of the invention is described below and is described in PCT publications WO 96/00245 and WO 96/00243 both published January 4, 1996. In this preferred method, the bulky ligand metallocene-type catalyst compound is slurried in a liquid to form a metallocene solution and a separate solution is formed containing an activator and a liquid. The liquid may be any compatible solvent or other liquid capable of forming a solution or the like with the bulky ligand metallocene-type catalyst compounds and/or activator of the invention. In the most preferred embodiment the liquid is a cyclic aliphatic or aromatic hydrocarbon, most preferably toluene. The bulky ligand metallocene-type catalyst compound and activator solutions are mixed together and added to a porous support or the porous support is added to the solutions such that the total volume of the bulky ligand metallocene-type catalyst compound solution and the activator solution or the bulky ligand metallocene-type catalyst compound and activator solution is less than four times the pore volume of the porous support, more preferably less than three times, even more preferably less than two times; preferred ranges being from 1.1 times to 3.5 times range and most preferably in the 1.2 to 3 times range.

Procedures for measuring the total pore volume of a porous support are well known in the art. Details of one of these procedures is discussed in Volume 1, *Experimental Methods* in *Catalytic Research* (Academic Press, 1968) (specifically see pages 67-96). This preferred procedure involves the use of a classical BET apparatus for nitrogen absorption. Another method well known in the art is described in Innes, *Total Porosity and Particle Density of Fluid Catalysts By Liquid Titration*, Vol. 28, No. 3, Analytical Chemistry 332-334 (March, 1956).

The mole ratio of the metal of the activator component to the metal of the supported bulky ligand metallocene-type catalyst compounds is in the range of between 0.3:1 to 1000:1, preferably 20:1 to 800:1, and most preferably 50:1 to 500:1. Where the activator is an ionizing activator such as those based on the anion tetrakis(pentafluorophenyl) boron, the mole ratio of the metal of the activator component to the metal component of the bulky ligand metallocene-type catalyst is preferably in the range of between 0.3:1 to 3:1.

In one embodiment of the invention, olefin(s), preferably $C_2$ to $C_{30}$ olefin(s) or alpha-olefin(s), preferably ethylene or propylene or combinations thereof are prepolymerized in the presence of the bulky ligand metallocene-type catalyst system of the invention prior to the main polymerization. The prepolymerization can be carried out batchwise or continuously in gas, solution or slurry phase including at elevated pressures. The prepolymerization can take place with any olefin monomer or combination and/or in the presence of any molecular weight controlling agent such as hydrogen. For examples of prepolymerization procedures, see U.S. Patent Nos. 4,748,221, 4,789,359, 4,923,833, 4,921,825, 5,283,278 and 5,705,578 and European publication EP-B-0279 863 and PCT Publication WO 97/44371. For the purposes of this patent specification and appended claims only, prepolymerization is considered a method for immobilizing a catalyst system and therefore considered to form a supported catalyst system.

**Method of Preparing the Supported Catalyst System of the Invention**

The method for making the supported catalyst system of the invention generally involves the combining, contacting, vaporizing, blending, bonding and/or mixing any of the above described supported bulky ligand metallocene-type catalyst systems made using any of the techniques described above with at least one bulky ligand metallocene-type catalyst compound as previously described. In the preferred embodiment, the bulky ligand metallocene-type catalyst compound is the same as that used to form the supported bulky ligand metallocene-type catalyst system, preferably the bulky ligand metallocene-type catalyst compound is the same as that used to form the supported catalyst system.

In one embodiment of the method of the invention a first bulky ligand metallocene-type catalyst compound, an activator and a carrier are combined to form a supported bulky ligand metallocene-type catalyst system, then the supported bulky ligand metallocene-type catalyst system is contacted with a second bulky ligand metallocene-type catalyst compound. The second bulky ligand metallocene-type catalyst compound can be the same or different from the first bulky ligand metallocene-type catalyst compound, preferably the same.

In this embodiment, the weight percent of the first bulky ligand metallocene-type catalyst compound to the second bulky ligand metallocene-type catalyst compound is the range of from 99 to 1, preferably from 95 to 5, most preferably from 90 to 10. In an embodiment, the mole ratio of the combined amount in moles of the first and second bulky ligand metallocene-type catalyst compounds to amount in moles of the supported bulky ligand metallocene-type catalysts system which is based on the moles of transition metal is in the range of from 50 to 1.01, preferably 25 to 1.02, more preferably 20 to 1.05, and most preferably 10 to 1.1.

In another embodiment the combined amount of the first bulky ligand metallocene-type catalyst compound (s) and the additional bulky ligand metallocene-type catalyst compound(s) to the total weight of the final supported metallocene-type catalyst system that includes the additional bulky ligand metallocene-type catalyst compound(s) is in the range of from 0.1 to 60 weight percent, preferably 0.2 to 40 weight percent, more preferably from 0.25 to 35 weight percent, and most preferably from 0.3 to 30 weight percent.

In another embodiment the combined amount of the additional bulky ligand metallocene-type catalyst compound(s) to the total weight of the final supported metallocene-type catalyst system that includes the additional bulky ligand metallocene-type catalyst compound(s) is in the range of from 0.05 to 60 weight percent, preferably 0.1 to 40 weight percent, more preferably from 0.125 to 35 weight percent, and most preferably from 0.15 to 30 weight percent.

In yet another embodiment the amount of additional bulky ligand metallocene-type catalyst compound(s) added to the supported metallocene-type catalyst system is preferably in amount where the overall aluminum to transition metal ratios of the combined supported bulky ligand metallocene-type catalyst system are in the range of from 10 to 1000, preferably 15 to 750, more preferably 20 to 600 and most preferably 30 to 500.

In still yet another embodiment of the invention, a prepolymerized metallocene-type catalyst system is treated with another bulky ligand metallocene-type catalyst compound.

In one embodiment of the invention a supported catalyst composition is made by contacting a preformed supported catalyst system with at least one additional bulky ligand metallocene-type catalyst compound, the preformed catalyst system comprising a first bulky ligand metallocene-type catalyst compound, a carrier, and an activator. In an embodiment, the preformed supported catalyst system can be contacted with an additional bulky ligand metallocene-type catalyst compound in a solution or an additional bulky ligand metallocene-type catalyst compound in a dry or substantially dry state. In yet another embodiment, the preformed catalyst system can be dry or substantially dry or in a solution, and then combined with the additional bulky ligand metallocene-type catalyst compound in either a solution form, a dry state or a substantially dry state. The preformed catalyst system can be in a dry or substantially dry state and then reslurried in a liquid such as mineral oil, toluene, or any the hydrocarbon prior to combining with the additional bulky ligand metallocene-type catalyst compound. Alternatively, in an embodiment, the dry or substantially dry preformed catalyst system is added to the additional bulky ligand metallocene-type catalyst compound in a mineral oil slurry or a hydrocarbon liquid, such a toluene or isopentane for example.

Preferably the contact temperature for combining the supported bulky ligand metallocene-type catalyst system and the additional bulky ligand metallocene-type catalyst compound is in the range of from 0 °C to about 100 °C, more preferably from 15 °C to about 75 °C, most preferably at about ambient temperature and pressure.

Preferably, the supported bulky ligand metallocene-type catalyst system is contacted with the additional bulky ligand metallocene-type catalyst compound for a period of time greater than a second, preferably from about 1 minute to about 48 hours, more preferably from about 10 minutes to about 10 hours, and most preferably from about 30 minutes to about 6 hours. The period of contacting refers to the mixing time only.

In another embodiment, the supported bulky ligand metallocene-type catalyst system and bulky ligand metallocene-type catalyst compound composition has a productivity greater than 2000 grams of polymer per gram of catalyst, preferably greater than 3000 grams of polymer per gram of catalyst, more preferably greater than 4000 grams of polymer per gram of catalyst and most preferably greater than 5000 grams of polymer per gram of catalyst.

## Polymerization Process

The supported catalyst system or composition of the invention described above are suitable for use in any polymerization process over a wide range of temperatures and pressures. The temperatures may be in the range of from -60 °C to about 280°C, preferably from 50°C to about 200°C, and the pressures employed may be in the range from 1 atmosphere to about 500 atmospheres or higher.

Polymerization processes include solution, gas phase, slurry phase and a high pressure process or a combination thereof. Particularly preferred is a gas phase or slurry phase polymerization of one or more olefins at least one of which is ethylene or propylene.

In one embodiment, the process of this invention is directed toward a solution, high pressure, slurry or gas phase polymerization process of one or more olefin monomers having from 2 to 30 carbon atoms, preferably 2 to 12 carbon atoms, and more preferably 2 to 8 carbon atoms. The invention is particularly well suited to the polymerization of two or more olefin monomers of ethylene, propylene, butene-1, pentene-1, 4-methyl-pentene-1, hexene-1, octene-1 and decene-1.

Other monomers useful in the process of the invention include ethylenically unsaturated monomers, diolefins having 4 to 18 carbon atoms, conjugated or nonconjugated dienes, polyenes, vinyl monomers and cyclic olefins. Non-limiting monomers useful in the invention may include norbornene, norbornadiene, isobutylene, isoprene, vinylbenzocyclobutane, styrenes, alkyl substituted styrene, ethylidene norbomene, dicyclopentadiene and cyclopentene.

In the most preferred embodiment of the process of the invention, a copolymer of ethylene is produced, where with ethylene, a comonomer having at least one alpha-olefin having from 4 to 15 carbon atoms, preferably from 4 to 12 carbon atoms, and most preferably from 4 to 8 carbon atoms, is polymerized in a gas phase process.

In another embodiment of the process of the invention, ethylene or propylene is polymerized with at least two different comonomers, optionally one of which may be a diene, to form a terpolymer.

In one embodiment, the invention is directed to a polymerization process, particularly a gas phase or slurry phase process, for polymerizing propylene alone or with one or more other monomers including ethylene, and/or other olefins having from 4 to 12 carbon atoms. Polypropylene polymers may be produced using the particularly bridged bulky ligand metallocene-type catalysts as described in U.S. Patent Nos. 5,296,434 and 5,278,264.

Typically in a gas phase polymerization process a continuous cycle is employed where in one part of the cycle of a reactor system, a cycling gas stream, otherwise known as a recycle stream or fluidizing medium, is heated in the reactor by the heat of polymerization. This heat is removed from the recycle composition in another part of the cycle by a cooling system external to the reactor. Generally, in a gas fluidized bed process for producing polymers, a gaseous stream containing one or more monomers is continuously cycled through a fluidized bed in the presence of a catalyst under reactive conditions. The gaseous stream is withdrawn from the fluidized bed and recycled back into the reactor. Simultaneously, polymer product is withdrawn from the reactor and fresh monomer is added to replace the polymerized monomer. (See for example U.S. Patent Nos. 4,543,399, 4,588,790, 5,028,670, 5,317,036, 5,352,749, 5,405,922, 5,436,304, 5,453,471, 5,462,999, 5,616,661 and 5,668,228).

The reactor pressure in a gas phase process may vary from about 100 psig (690 kPa) to about 500 psig (3448 kPa), preferably in the range of from about 200 psig (1379 kPa) to about 400 psig (2759 kPa), more preferably in the range of from about 250 psig (1724 kPa) to about 350 psig (2414 kPa).

The reactor temperature in a gas phase process may vary from about 30°C to about 120°C, preferably from about 60°C to about 115°C, more preferably in the range of from about 70°C to 110°C, and most preferably in the range of from about 70°C to about 95°C.

Other gas phase processes contemplated by the process of the invention include series or multistage polymerization processes. Also gas phase processes contemplated by the invention include those described in U.S. Patent Nos. 5,627,242, 5,665,818 and 5,677,375, and European publications EP-A- 0 794 200 EP-B1-0 649 992, EP-A- 0 802 202 and EP-B- 634 421.

In a preferred embodiment, the reactor utilized in the present invention is capable of and the process of the invention is producing greater than 500 lbs of polymer per hour (227 Kg/hr) to about 200,000 lbs/hr (90,900 Kg/hr) or higher of polymer, preferably greater than 1000 lbs/hr (455 Kg/hr), more preferably greater than 10,000 lbs/hr (4540 Kg/hr), even more preferably greater than 25,000 lbs/hr (11,300 Kg/hr), still more preferably greater than 35,000 lbs/hr (15,900 Kg/hr), still even more preferably greater than 50,000 lbs/hr (22,700 Kg/hr) and most preferably greater than 65,000 lbs/hr (29,000 Kg/hr) to greater than 100,000 lbs/hr (45,500 Kg/hr).

A slurry polymerization process generally uses pressures in the range of from about 1 to about 50 atmospheres and even greater and temperatures in the range of 0°C to about 120°C. In a slurry polymerization, a suspension of solid, particulate polymer is formed in a liquid polymerization diluent medium to which ethylene and comonomers and often hydrogen along with catalyst are added. The suspension including diluent is intermittently or continuously removed from the reactor where the volatile components are separated from the polymer and recycled, optionally after a distillation, to the reactor. The liquid diluent employed in the polymerization medium is typically an alkane having from 3 to 7 carbon atoms, preferably a branched alkane. The medium employed should be liquid under the conditions of polymerization and relatively inert. When a propane medium is used the process must be operated above the reaction diluent critical temperature and pressure. Preferably, a hexane or an isobutane medium is employed.

A preferred polymerization technique of the invention is referred to as a particle form polymerization, or a slurry process where the temperature is kept below the temperature at which the polymer goes into solution. Such technique is well known in the art, and described in for instance U.S. Patent No. 3,248,179. Other slurry processes include those employing a loop reactor and those utilizing a plurality of stirred reactors in series, parallel, or combinations thereof. Non-limiting examples of slurry processes include continuous loop or stirred tank processes. Also, other examples of slurry processes are described in U.S. Patent No. 4,613,484.

In an embodiment the reactor used in the slurry process of the invention is capable of and the process of the invention is producing greater than 2000 lbs of polymer per hour (907 Kg/hr), more preferably greater than 5000 lbs/hr (2268 Kg/hr), and most preferably greater than 10,000 lbs/hr (4540 Kg/hr). In another embodiment the slurry reactor used in the process of the invention is producing greater than 15,000 lbs of polymer per hour (6804 Kg/hr), preferably greater than 25,000 lbs/hr (11,340 Kg/hr) to about 100,000 lbs/hr (45,500 Kg/hr).

Examples of solution processes are described in U.S. Patent Nos. 4,271,060, 5,001,205, 5,236,998 and 5,589,555.

A preferred process of the invention is where the process, preferably a slurry or gas phase process is operated in the presence of a bulky ligand metallocene-type catalyst system of the invention and in the absence of or essentially free of any scavengers, such as triethylaluminum, trimethylaluminum, tri-isobutylaluminum and tri-n-hexylaluminum and diethyl aluminum chloride, dibutyl zinc. This preferred process is described in PCT publication WO 96/08520 and U.S. Patent No. 5,712,352 and 5,763,543.

**Polymer Products**

The polymers produced by the process of the invention can be used in a wide variety of products and end-use applications. The polymers produced by the process of the invention include linear low density polyethylene, elastomers, plastomers, high density polyethylenes, low density polyethylenes, polypropylene and polypropylene copolymers.

The polymers, typically ethylene based polymers, have a density in the range of from 0.86g/cc to 0.97 g/cc, preferably in the range of from 0.88 g/cc to 0.965 g/cc, more preferably in the range of from 0.900 g/cc to 0.96 g/cc, even more preferably in the range of from 0.905 g/cc to 0.95 g/cc, yet even more preferably in the range from 0.910 g/cc to 0.940 g/cc, and most preferably greater than 0.915 g/cc, preferably greater than 0.920 g/cc, and most preferably greater than 0.925 g/cc. Density is measured in accordance with ASTM-D-1238.

The polymers produced by the process of the invention typically have a molecular weight distribution, a weight average molecular weight to number average molecular weight ($M_w/M_n$) of greater than 1.5 to about 15, particularly greater than 2 to about 10, more preferably greater than about 2.2 to less than about 8, and most preferably from 2.5 to 8.

Also, the polymers of the invention typically have a narrow composition distribution as measured by Composition Distribution Breadth Index (CDBI). Further details of determining the CDBI of a copolymer are known to those skilled in the art. See, for example, PCT Patent Application WO 93/03093, published February 18, 1993.

The bulky ligand metallocene-type catalyzed polymers of the invention in one embodiment have CDBI's generally in the range of greater than 50% to 100%, preferably 99%, preferably in the range of 55% to 85%, and more preferably 60% to 80%, even more preferably greater than 60%, still even more preferably greater than 65%.

In another embodiment, polymers produced using a bulky ligand metallocene-type catalyst system of the invention have a CDBI less than 50%, more preferably less than 40%, and most preferably less than 30%.

The polymers of the present invention in one embodiment have a melt index (MI) or ($I_2$) as measured by ASTM-D-1238-E in the range from 0.01 dg/min to 1000 dg/min, more preferably from about 0.01 dg/min to about 100 dg/min, even more preferably from about 0.1 dg/min to about 50 dg/min, and most preferably from about 0.1 dg/min to about 10 dg/min.

The polymers of the invention in an embodiment have a melt index ratio ($I_{21}/I_2$) ($I_{21}$ is measured by ASTM-D-1238-F) of from 10 to less than 25, more preferably from about 15 to less than 25.

The polymers of the invention in a preferred embodiment have a melt index ratio ($I_{21}/I_2$) ($I_{21}$ is measured by ASTM-D-1238-F) of from preferably greater than 25, more preferably greater than 30, even more preferably greater that 40, still even more preferably greater than 50 and most preferably greater than 65. In an embodiment, the polymer of the invention may have a narrow molecular weight distribution and a broad composition distribution or vice-versa, and may be those polymers described in U.S. Patent No. 5,798,427.

In yet another embodiment, propylene based polymers are produced in the process of the invention. These polymers include atactic polypropylene, isotactic polypropylene, hemi-isotactic and syndiotactic polypropylene. Other propylene polymers include propylene block or impact copolymers. Propylene polymers of these types are well known in the art see for example U.S. Patent Nos. 4,794,096, 3,248,455, 4,376,851, 5,036,034 and 5,459,117.

The polymers of the invention may be blended and/or coextruded with any other polymer. Non-limiting examples of other polymers include linear low density polyethylenes produced via conventional Ziegler-Natta and/or bulky ligand metallocene-type catalysis, elastomers, plastomers, high pressure low density polyethylene, high density polyethylenes, polypropylenes.

Polymers produced by the process of the invention and blends thereof are useful in such forming operations as film, sheet, and fiber extrusion and co-extrusion as well as blow molding, injection molding and rotary molding. Films include blown or cast films formed by coextrusion or by lamination useful as shrink film, cling film, stretch film, sealing films, oriented films, snack packaging, heavy duty bags, grocery sacks, baked and frozen food packaging, medical packaging, industrial liners, membranes in food-contact and non-food contact applications. Fibers include melt spinning, solution spinning and melt blown fiber operations for use in woven or non-woven form to make filters, diaper fabrics, medical garments, geotextiles. Extruded articles include medical tubing, wire and cable coatings, geomembranes, and pond liners. Molded articles include single and multi-layered constructions in the form of bottles, tanks, large hollow articles, rigid food containers and toys.

## EXAMPLES

In order to provide a better understanding of the present invention including representative advantages thereof, the following examples are offered.

Activity for laboratory slurry run was measured in gram polyethylene/mmol metal-hr-100 psi (690 kPa) ethylene and reported in Table 1 as Activity Zr (zirconium) and Activity Al (aluminum). The productivity for the slurry runs was measured in grams polyethylene/gram supported catalyst-hour-100 psi (690 kPa) ethylene. In gas phase run, the activity was measured by residue Zr in ppm.

PDI is the Polydispersity Index, which is equivalent to Molecular Weight Distribution (Mw/Mn, where Mw is weight average molecular weight and Mn is number average molecular weight), as determined by gel permeation chromatography using crosslinked polystyrene columns; pore size sequence: 1 column less than 1000 A, 3 columns of mixed $5 \times 10^7$ A; 1,2,4-trichlorobenzene solvent at 140°C with refractive index detection.

CCLDI (Crystallizable Chain Length Distribution Index ) is a measure of the crystallizable chain length distribution in an ensemble of ethylene based polymer chains. Branching frequency can be expressed as the average distance (in $CH_2$ units) between branches along the main polymer chain backbone or as the crystallizable chain length (L) where,

$$L \approx \frac{1000}{BF} \quad \text{and} \quad \lim_{BF \to 0} L \to 2260$$

Utilizing moments of distribution analogous to the molecular weight distribution, one can define a number average ($L_n$) and weight average ($L_w$) moments for $L_i$ where:

$$L_n = 1/ {}_i(w_i/L_i) \qquad \text{and} \qquad L_w = {}_i w_i L_i,$$

$w_i$ is the weight fraction of the polymer component i having an average backbone chain spacing $L_i$ between two adjacent branch points. The composition distribution index or crystallizable chain length distribution index (CCLDI) is then defined as:

$$CCLDI = L_w/L_n.$$

Catalyst Compound A is bis(1,3-methylbutyl cyclopentadienyl) zirconium dichloride, available from Albemarle Corporation, Baton Rouge, Louisiana.

Catalyst Compound B is dimethylsilylbis(tetrahydroindenyl)zirconium dichloride, available from Albemarle Corporation, Baton Rouge, Louisiana.

Catalyst Compound C is dimethylsilylbis(2-methylindenyl)zirconium dichloride, available from Boulder Scientific Company.

Catalyst Compound D is dimethylsilylbis(n-propylcyclopentadienyl) zirconium dichloride, available from Boulder Scientific Company.

MAO is methylaluminoxane in toluene, available from Albemarle Corporation, Baton Rogue, Louisiana.

## EXAMPLE 1

### Preparation of Supported Catalyst System (I) using Catalyst Compound A

Into a 2 gallon (7.57 liters) reactor was charged 1060 g of 30 wt% methylalumoxane (MAO), an activator, solution in toluene (PMAO, modified MAO available from Akzo Nobel, LaPorte, Texas), followed by 1.5 liter of toluene (available from Albemarle Corporation, Baton Rogue, Louisiana). While stirring 23.1 g of bis(1,3-methyl-n-butylcyclopentadienyl) zirconium dichloride, a bulky ligand metallocene-type catalyst compound, as an 8 wt% solution in toluene was added to the reactor and the mixture was stirred for 60 min at room temperature to form a catalyst solution. The content of the reactor was unloaded to a flask and 850 g of Davison 948 silica dehydrated at 600°C (Davison 948 is available from W.R. Grace, Davison Division, Baltimore, Maryland) was charged to the reactor. The catalyst solution contained in the flask was then added slowly to the silica carrier in the reactor while agitating slowly. More toluene (350 cc) was added to insure a slurry consistency and the mixture was stirred for an additional 20 min. 6 g of Kemamine AS-990 (available from Witco Corporation, Memphis, Tennessee) as a 10% solution in toluene was added and stirring continued for 30 min. at room temperature. The temperature was then raised to 68°C (155°F) and vacuum was applied in order to dry the polymerization catalyst. Drying was continued for approximately 6 hours at low agitation until the polymerization catalyst appeared to be free flowing. It was then discharged into a flask and stored under a $N_2$ atmosphere. The yield was 1006 g due to some losses in the drying process. Analysis of the polymerization catalyst was: Zr = 0.40 wt%, Al = 12 wt%.

## EXAMPLE 2

### Preparation of Supported Catalyst System (II) using Catalyst Compound B

The catalyst compound used is a dimethylsilyl-bis(tetrahydroindenyl) zirconium dichloride ($Me_2Si$ ($H_4Ind)_2ZrCl_2$) available from Albemarle Corporation, Baton Rouge, Louisiana. A typical preparation of the polymerization catalyst used in the Examples below is as follows: The ($Me_2Si(H_4Ind)_2ZrCl_2$) catalyst compound was supported on Crosfield ES-70 grade silica dehydrated at 600°C having approximately 1.0 weight percent water Loss on Ignition (LOI). LOI is measured by determining the weight loss of the support material which has been heated and held at a temperature of about 1000°C for about 22 hours. The Crosfield ES-70 grade silica has an average particle size of 40 microns and is available from Crosfield Limited, Warrington, England.

The first step in the manufacture of the supported bulky ligand metallocene-type catalyst above involves forming a precursor solution. 460 lbs (209 kg) of sparged and dried toluene is added to an agitated reactor after which 1060 lbs (482 kg) of a 30 weight percent methylaluminoxane (MAO) in toluene (available from Albemarle, Baton Rouge, Louisiana) is added. 947 lbs (430 kg) of a 2 weight percent toluene solution of a dimethylsilyl-bis(tetrahydroindenyl) zirconium dichloride catalyst compound and 600 lbs (272 kg) of additional toluene are introduced into the reactor. The precursor solution is then stirred at 80°F to 100°F (26.7°C to 37. 8°C) for one hour.

While stirring the above precursor solution, 850 lbs (386 kg) of 600 °C Crosfield dehydrated silica carrier is added slowly to the precursor solution and the mixture agitated for 30 min. at 80°F to 100 °F (26.7 to 37. 8 °C). At the end of the 30 min. agitation of the mixture, 240 lbs (109kg) of a 10 weight percent toluene solution of AS-990 (N,N-bis (2-hydroxylethyl) octadecylamine)/($C_{18}H_{37}N(CH_2CH_2OH)_2$) available as Kemamine AS-990 from Witco Corporation, Memphis, Tennessee, is added together with an additional 110 lbs (50 kg) of a toluene rinse and the reactor content then is mixed for 30 min. while heating to 175°F (79°C). After 30 min. vacuum is applied and the polymerization catalyst mixture dried at 175°F (79°C) for about 15 hours to a free flowing powder. The final polymerization catalyst weight was 1200 lbs (544 kg) and had a Zr wt% of 0.35 and an Al wt% of 12.0.

## EXAMPLE 3

### Preparation of Supported Catalyst System (III) using Catalyst Compound C

A 1-gallon jacketed vessel equipped with a helical impeller was charged with 2.2 L MAO in toluene (30wt%) and a slurry of 23 g ofdimethylsilylbis(2-methylindenyl)zirconium dichloride, available from Boulder Scientific Company in about 400 ml of toluene. These were mixed at ambient temperature for 3 hours. Next, 850 g of silica (DAVISON 955, previously dried at 600°C.) were added to the reactor, and the resulting slurry was stirred for approximately 16 hours at ambient temperature. The toluene was removed by placing the vessel under partial vacuum while heating the jacket to about 90°C. with a nitrogen sweep over the material. From the reactor were recovered 1400 g of light peach, free flowing powder. ICP analysis showed the catalyst composition to have 0.35 weight percent Zr and 16.7 weight percent Al.

Examples 1 through 3 are representative examples for preparing a supported bulky ligand metallocene-type catalyst system or a preformed catalyst system. The following examples describes, non-limiting, illustrative, methods for adding the additional bulky ligand metallocene-type catalyst compound.

### Preparation of Supported Catalyst Systems or Compositions

Three different embodiments of the invention were tested, and are described below:

### Method 1

In this method a solution of a second bulky ligand metallocene-type catalyst compound in mineral oil (Kaydol) was mixed with a supported bulky ligand metallocene-type catalyst system. The resulting slurry was then stirred at room temperature for 24 hours before being employed for polymerization. This approach is most economical and is especially preferred with catalyst precursors that have high solubility in aliphatic hydrocarbons such as where the Catalyst Compound is A or D.

**Method 2**

In this method a solution of a second bulky ligand metallocene-type catalyst compound in toluene was mixed with a supported bulky ligand metallocene-type catalyst system. This mixture was then stirred at above room temperature for 24 hours before being used for polymerization. This approach is best used for catalyst precursors that have moderate solubility in aliphatic hydrocarbons such as where the Catalyst Compound is B or C.

**Method 3**

This method is similar to that of Method 2 except the solvent toluene was removed at the end of stirring under vacuum with mild heating. The resulting free-flowing powder can be used directly or added to mineral oil and fed as slurry catalyst for polymerization. This embodiment may be generally used for all catalyst precursors. The following preparative method (Example 4) provides a typical example for using this method.

**Example 4**

**Preparation of Supported Catalyst Composition based on Method 3**

A 500 ml airless flask equipped with a magnetic stir bar was charged with 78.5 g of the above mentioned supported catalyst system (III) ((SCS)) of Example 3 and 140 ml of toluene. To this slurry was added a solution of 0.48 g of dimethyl-silylbis(n-propylcyclopentadienyl) zirconium dichloride (Catalyst Compound D) in 10 ml of toluene. These were mixed at ambient temperature for about 24 hours. The toluene was removed by placing the vessel under a partial vacuum while heating the flask in an oil bath at about 65°C. From the reactor mixture was recovered 650 g of light peach, free flowing powder. ICP analysis showed the catalyst composition to have 0.43 weight percent of Zr and 15.0 weight percent Al.

**Polymerization Process**

**Examples 6, 8, 9 and 10 and Comparative Examples 5 and 7**

In each of Examples 6 and 8 through 10 and Comparative Examples 5 and 7, polyethylene was produced in a slurry phase reactor using a catalyst composition as specified in Table 1 and the polymerization process described below. For each of Examples 6, 8, 9 and 10, a slurry of one of the preformed supported catalyst systems illustrative of the invention was prepared using the specific method described above, Methods 1, 2 or 3. An aliquot of this slurry mixture was added to an 8 ounce (250 ml) bottle containing 100 ml of hexane. Hexene-1 was then added to the pre-mixed catalyst composition. Anhydrous conditions were maintained. The following describes the polymerization process used for all examples 5 through 10.
The slurry reactor was a 1 liter, stainless steel autoclave equipped with a mechanical agitator. The reactor was first dried by heating at 96°C under a stream of dry nitrogen for 40 minutes. After cooling the reactor to 50°C, 500 ml of hexane was added to the reactor, followed by 0.25 ml of tri-isobutylaluminum (TIBA) in hexane (0.86 mole, used as impurity scavenger), and the reactor components were stirred under a gentle flow of nitrogen. The pre-mixed catalyst composition, or in the case of the comparative examples the preformed catalyst system only, was then transferred to the reactor under a stream of nitrogen and the reactor was sealed. The temperature of the reactor was gradually raised to 75°C and the reactor was pressured to 150 psi (1034 kPa) with ethylene. Heating was continued until a polymerization temperature of 85°C was attained. Unless otherwise noted, polymerization was continued for 30 minutes, during which time ethylene was continually added to the reactor to maintain a constant pressure. At the end of 30 minutes, the reactor was vented and opened.
Table 1 gives the productivity, the activity, the molecular weights (Mw and Mn), the molecular weight distributions (Mw/Mn, also known as PDI), and CCLDI of examples 5-10. As shown in Table 1, the catalyst compositions illustrative of the invention (Examples 6, 8, 9 and 10) exhibited a higher productivity than the Comparative Examples (CEx 5 and CEx 7).

**Examples 11 and 12**

In each of Comparative Example 11 (CEx 11) and Example 12, polyethylene was produced in a gas phase reactor using a catalyst composition as specified in Table 2. The catalyst composition used in Example 12 was that described above as Example 4. The preformed supported catalyst system used in Comparative Example 11 was that described in Example 3. The reactor used was a semi-batch polymerization reactor that is run in a continuous fashion. It is an 8" (20.32 cm) fluid bed reactor with a 20-30 pound (9.1-13.6 Kg) bed weight during lined-out operation. In the continuous mode, the reactor is started up until the polymer bed grows to about 20 pounds (9.1 Kg). The product is discharged intermittently using the cyclic product discharge system (PDS). The PDS system discharges about 0.4 lbs each cycle. The reactor is then operated in a continuous steady state mode that typically for about 8 hours.

A typical run starts with loading of a pre-bed of polymer of about 5-8 pounds (2.27-3.63 Kg). The reactor is then dried overnight at 80-85°C with nitrogen purge. The next morning, an alkyl passivation charge (typically about 50 cc of triethylaluminum) is fed into the reactor and after mixing for 15 minutes, reactor is purged with nitrogen. Then the gases are admitted to the reactor to the desired composition and introduction of the supported catalyst composition is started. The supported catalyst composition is fed to the reactor through a plunger-type metering pump. Details of the feeding mechanism can be found in U. S. Patent No. 5,672,669, herein incorporated by reference. As the polymerization progresses, additional monomers and hydrogen if necessary are fed continuously to maintain the desired gas composition. As soon as the bed reaches the high point of the reactor, the product discharge system is started and discharged, typically when the bed weight is about 25 pounds (11.3 Kg) and discharge rate is about 0.4 lb (0.18 Kg) each cycle. Production rate can vary from 5 to 10 pounds (2.27 to 4.54 Kg) per hour. A typical batch size is 25 to 50 pounds (11.3 to 22.7 Kg).

## Table 1

| Example | Supported Catalyst System (SCS) | Second Catalyst Compound (SCC) | SCC/ SCS ratio | Method | Activity (Zr) | Activity (Al) | Productivity (g/g) | MI (dg/min) | FI | MFR ($I_{21}/I_2$) | PDI | CCLDI |
|---|---|---|---|---|---|---|---|---|---|---|---|---|
| CEx 5 | I | None | 0 | None | 36431 | 364 | 2136 | 0.21 | 4.8 | 23 | -- | -- |
| 6 | I | A | 0.73 | 1 | 48286 | 832 | 4861 | 0.18 | 4.0 | 22 | -- | -- |
| CEx 7 | II | None | 0 | None | 34962 | 300 | 1722 | 0.13 | 6.5 | 50 | 4.7 | 1.8 |
| 8 | II | A | 0.87 | 2 | 46439 | 749 | 4272 | 0.13 | 5.2 | 40 | 3.9 | 3.8 |
| 9 | II | B | 0.5 | 3 | 36357 | 438 | 2678 | 0.14 | 5.5 | 39 | -- | -- |
| 10 | II | B | 1 | 3 | 26775 | 425 | 2585 | -- | 2.4 | -- | -- | -- |

Reaction Conditions: 85 °C, 133 psi (917 kPa) ethylene, 20 ml 1-hexene, Zr charge=0.0015mmol.

## Table 2

| Example | Supported Catalyst System (SCS) | Second Catalyst Compound (SCC) | SCC/ SCS ratio | Method | Al/Zr | $C_6/C_2$ | Zr (ppm) | Mw | Mn | PDI | Density (g/cc) |
|---|---|---|---|---|---|---|---|---|---|---|---|
| CEx 11 | III | None | 0 | None | 162 | 0.004 | 4.4 | 329490 | 48438 | 6.8 | 0.9290 |
| 12 | III | D | 0.33 | 3 | 118 | 0.004 | 3.7 | 143092 | 11986 | 12 | 0.9457 |

Reaction conditions: 90 °C, 240 psi (1655 kPa) ethylene.

While the present invention has been described and illustrated by reference to particular embodiments, those of ordinary skill in the art will appreciate that the invention lends itself to variations not necessarily illustrated herein. For example, it is contemplated that two or more supported catalyst compositions of the invention can be used. For this reason, then, reference should be made solely to the appended claims for purposes of determining the true scope of the present invention.

## Claims

1. A method for preparing a supported catalyst composition consisting of the steps:

(a) forming a supported bulky ligand metallocene-type catalyst system; and

(b) contacting the supported bulky ligand metallocene-type catalyst system of (a) with an additional bulky ligand metallocene-type catalyst compound, wherein the additional bulky ligand metallocene-type catalyst is in a liquid, and the bulky ligands are represented by one or more open, acyclic, or fused ring(s) or ring system (s) or a combination thereof.

2. The method of claim 1, wherein the supported bulky ligand metallocene type catalyst system comprises a first bulky ligand metallocene-type catalyst compound, an activator and a carrier.

3. The method of claim 2, wherein the additional bulky ligand metallocene-type catalyst compound is the same as the first bulky ligand metallocene-type catalyst compound.

4. The method of claim 1, wherein the additional bulky ligand metallocene-type catalyst compound is different from the first bulky ligand metallocene-type catalyst compound.

5. The method of claim 1, wherein the weight percent of the additional bulky ligand metallocene-type catalyst compound to the first bulky ligand metallocene-type catalyst compound is the in the range of from 90 to 10.

6. The method of claim 1, wherein the liquid is mineral oil.

7. The method of claim 1, wherein the liquid is an aliphatic hydrocarbon.

8. The method of claim 1, wherein the amount of the additional bulky ligand metallocene-type catalyst compound to the combined weight of the supported bulky ligand metallocene-type catalyst system and the additional bulky ligand metallocene-type catalyst compound is in the range of from 0.05 to 60 weight percent.

9. A process for polymerizing olefin(s) in the presence of a supported catalyst composition produced according to the method as claimed in claim 1.

10. The process of claim 9, wherein the process is a gas phase process.

11. The process of claim 9, wherein the preformed supported bulky ligand metallocene-type catalyst system comprises at least one bulky ligand metallocene-type compound.

12. The process of claim 11, wherein the at least one bulky ligand metallocene-type catalyst compound is different from the bulky ligand metallocene-type compound.

13. A method for improving the productivity of a supported bulky ligand metallocene-type catalyst system, the method consisting of the steps (a) treating the supported bulky ligand metallocene-type catalyst system with at least one second bulky ligand metallocene-type catalyst compound, wherein the at least one second bulky ligand metallocene-type catalyst compound is in a liquid, and the bulky ligands are represented by one or more open, acyclic, or fused ring(s) or ring system(s) or a combination thereof, and (b) introducing the treated supported bulky ligand metallocene-type catalyst system to a reactor in the presence of monomer(s) under polymerization conditions.

14. The method of claim 13, wherein the polymerization conditions are gas phase polymerization conditions.

15. The method of claim 13, wherein the polymerization conditions are slurry phase polymerization conditions.

16. The method of claim 13, wherein the amount of the at least one second bulky ligand metallocene-type catalyst compound to the total weight of the supported bulky ligand metallocene-type catalyst system and the at least one second bulky ligand metallocene-type catalyst compound is in the range of from 0.1 to 60 weight percent.

17. The method of claim 13, wherein the supported bulky ligand metallocene type catalyst system comprises an activator and a first bulky ligand metallocene-type catalyst compound.

18. The method of claim 17, wherein the first bulky ligand metallocene-type catalyst compound is the same as the at least one second bulky ligand metallocene-type catalyst compound.

**EP 1 114 069 B1**

**Patentansprüche**

1. Verfahren zur Herstellung einer geträgerten Katalysatorzusammensetzung, wobei das Verfahren aus den Schritten besteht:

   (a) Bilden eines geträgerten Katalysatorsystems vom Metallocen-Typ mit sperrigem Liganden; und
   (b) In-Kontakt-Bringen des geträgerten Katalysatorsystems vom Metallocen-Typ mit sperrigem Liganden von (a) mit einer zusätzlichen Katalysatorverbindung vom Metallocen-Typ mit sperrigem Liganden, wobei der zusätzliche Katalysator vom Metallocen-Typ mit sperrigem Liganden in einer Flüssigkeit vorliegt und die sperrigen Liganden durch einen oder mehrere offene(n), azyklische(n) oder kondensierte(n) Ring bzw. Ringe oder ein oder mehrere offene(s), azyklische(s) oder kondensierte(s) Ringsystem bzw. Ringsysteme oder eine Kombination davon dargestellt werden.

2. Verfahren nach Anspruch 1, wobei das geträgerte Katalysatorsystem vom Metallocen-Typ mit sperrigem Liganden eine erste Katalysatorverbindung vom Metallocen-Typ mit sperrigem Liganden, einen Aktivator und einen Träger umfasst.

3. Verfahren nach Anspruch 2, wobei die zusätzliche Katalysatorverbindung vom Metallocen-Typ mit sperrigem Liganden die gleiche wie die erste Katalysatorverbindung vom Metallocen-Typ mit sperrigem Liganden ist.

4. Verfahren nach Anspruch 1, wobei die zusätzliche Katalysatorverbindung vom Metallocen-Typ mit sperrigem Liganden von der ersten Katalysatorverbindung vom Metallocen-Typ mit sperrigem Liganden verschieden ist.

5. Verfahren nach Anspruch 1, wobei die Gewichtsprozent der zusätzlichen Katalysatorverbindung vom Metallocen-Typ mit sperrigem Liganden zu der ersten Katalysatorverbindung vom Metallocen-Typ mit sperrigem Liganden im Bereich von 90 bis 10 liegen.

6. Verfahren nach Anspruch 1, wobei es sich bei der Flüssigkeit um Mineralöl handelt.

7. Verfahren nach Anspruch 1, wobei es sich bei der Flüssigkeit um einen aliphatischen Kohlenwasserstoff handelt.

8. Verfahren nach Anspruch 1, wobei die Menge an der zusätzlichen Katalysatorverbindung vom Metallocen-Typ mit sperrigem Liganden zum kombinierten Gewicht des geträgerten Katalysatorsystems vom Metallocen-Typ mit sperrigem Liganden und der zusätzlichen Katalysatorverbindung vom Metallocen-Typ mit sperrigem Liganden im Bereich von 0,05 bis 60 Gewichtsprozent liegt.

9. Verfahren zur Polymerisation von Olefin(en) in Gegenwart einer geträgerten Katalysatorzusammensetzung, hergestellt gemäß dem Verfahren nach Anspruch 1.

10. Verfahren nach Anspruch 9, wobei es sich bei dem Verfahren um ein Gasphasenverfahren handelt.

11. Verfahren nach Anspruch 9, wobei das vorgebildete, geträgerte Katalysatorsystem vom Metallocen-Typ mit sperrigem Liganden wenigstens eine Verbindung vom Metallocen-Typ mit sperrigem Liganden umfasst.

12. Verfahren nach Anspruch 11, wobei die wenigstens eine Katalysatorverbindung vom Metallocen-Typ mit sperrigem Liganden von der Verbindung vom Metallocen-Typ mit sperrigem Liganden verschieden ist.

13. Verfahren zur Verbesserung der Produktivität eines geträgerten Katalysatorsystems vom Metallocen-Typ mit sperrigem Liganden, wobei das Verfahren aus den Schritten besteht:

   (a) Behandeln des geträgerten Katalysatorsystems vom Metallocen-Typ mit sperrigem Liganden mit wenigstens einer zweiten Katalysatorverbindung vom Metallocen-Typ mit sperrigem Liganden, wobei die wenigstens eine zweite Katalysatorverbindung vom Metallocen-Typ mit sperrigem Liganden in einer Flüssigkeit vorliegt und die sperrigen Liganden durch einen oder mehrere offene(n), azyklische(n) oder kondensierte(n) Ring bzw. Ringe oder ein oder mehrere offene(s), azyklische(s) oder kondensierte(s) Ringsystem bzw. Ringsysteme oder eine Kombination davon dargestellt werden, und
   (b) Einbringen des behandelten, geträgerten Katalysatorsystems vom Metallocen-Typ mit sperrigem Liganden in einen Reaktor in Gegenwart von Monomer(en) unter Polymerisationsbedingungen.

18

**14.** Verfahren nach Anspruch 13, wobei es sich bei den Polymerisationsbedingungen um Gasphasenpolymerisationsbedingungen handelt.

**15.** Verfahren nach Anspruch 13, wobei es sich bei den Polymerisationsbedingungen um Aufschlämmungsphasenpolymerisationsbedingungen handelt.

**16.** Verfahren nach Anspruch 13, wobei die Menge an der wenigstens einen zweiten Katalysatorverbindung vom Metallocen-Typ mit sperrigem Liganden zum Gesamtgewicht des geträgerten Katalysatorsystems vom Metallocen-Typ mit sperrigem Liganden und der wenigstens einen zweiten Katalysatorverbindung vom Metallocen-Typ mit sperrigem Liganden im Bereich von 0,1 bis 60 Gewichtsprozent liegt.

**17.** Verfahren nach Anspruch 13, wobei das geträgerte Katalysatorsystem vom Metallocen-Typ mit sperrigem Liganden einen Aktivator und eine erste Katalysatorverbindung vom Metallocen-Typ mit sperrigem Liganden umfasst.

**18.** Verfahren nach Anspruch 17, wobei die erste Katalysatorverbindung vom Metallocen-Typ mit sperrigem Liganden die gleiche wie die wenigstens eine zweite Katalysatorverbindung vom Metallocen-Typ mit sperrigem Liganden ist.

**Revendications**

**1.** Procédé pour préparer une composition de catalyseur supporté comprenant les étapes consistant à :

(a) former un système catalyseur de type métallocène à ligand volumineux supporté ; et
(b) mettre en contact le système catalyseur de type métallocène à ligand volumineux supporté de (a) avec un composé catalyseur de type métallocène à ligand volumineux additionnel, où le catalyseur de type métallocène à ligand volumineux additionnel est dans un liquide, et les ligands volumineux sont représentés par un ou plusieurs cycles ou systèmes cycliques condensés, ouverts ou acycliques, ou encore par une de leurs combinaisons.

**2.** Procédé selon la revendication 1, dans lequel le système catalyseur de type métallocène à ligand volumineux supporté comprend un premier composé de catalyseur de type métallocène à ligand volumineux, un activateur et un support.

**3.** Procédé selon la revendication 2, dans lequel le composé de catalyseur de type métallocène à ligand volumineux supporté additionnel est le même que le premier composé de catalyseur de type métallocène à ligand volumineux.

**4.** Procédé selon la revendication 1, dans lequel le composé de catalyseur de type métallocène à ligand volumineux supporté additionnel est différent du premier composé de catalyseur de type métallocène à ligand volumineux.

**5.** Procédé selon la revendication 1, dans lequel le pourcentage en poids du composé de catalyseur de type métallocène à ligand volumineux supporté additionnel par rapport au premier composé de catalyseur de type métallocène à ligand volumineux est situé dans la plage allant de 90 à 10.

**6.** Procédé selon la revendication 1, dans lequel le liquide est de l'huile minérale.

**7.** Procédé selon la revendication 1, dans lequel le liquide est un hydrocarbure aliphatique.

**8.** Procédé selon la revendication 1, dans lequel la quantité du composé de catalyseur de type métallocène à ligand volumineux supporté additionnel par rapport au poids combiné du système catalyseur de type métallocène à ligand volumineux supporté et du composé de catalyseur de type métallocène à ligand volumineux supporté additionnel est située dans la plage allant de 0,05 à 60 % en poids.

**9.** Procédé pour polymériser une ou plusieurs oléfines en présence d'une composition de catalyseur supporté produite conformément au procédé de la revendication 1.

**10.** Procédé selon la revendication 9, dans lequel le procédé est un procédé en phase gazeuse.

**11.** Procédé selon la revendication 9, dans lequel le système catalyseur de type métallocène à ligand volumineux supporté préformé comprend au moins un composé de type métallocène à ligand volumineux.

12. Procédé selon la revendication 11, dans lequel le composé de catalyseur de type métallocène à ligand volumineux supporté au nombre d'au moins un est différent du composé de type métallocène à ligand volumineux supporté.

13. Procédé pour améliorer la productivité d'un système catalyseur de type métallocène à ligand volumineux supporté, le procédé comprenant les étapes consistant à (a) traiter le système catalyseur de type métallocène à ligand volumineux supporté avec au moins un deuxième composé de catalyseur de type métallocène à ligand volumineux supporté, où le deuxième composé de catalyseur de type métallocène à ligand volumineux supporté au nombre d'au moins un est dans un liquide, et les ligands volumineux sont représentés par un ou plusieurs cycles ou systèmes cycliques ouverts, acycliques ou condensés, ou encore par une de leurs combinaisons, et (b) introduire le système catalyseur de type métallocène à ligand volumineux supporté traité dans un réacteur en présence d'un ou plusieurs monomères dans des conditions de polymérisation.

14. Procédé selon la revendication 13, dans lequel les conditions de polymérisation sont des conditions de polymérisation en phase gazeuse.

15. Procédé selon la revendication 13, dans lequel les conditions de polymérisation sont des conditions de polymérisation en phase en suspension.

16. Procédé selon la revendication 13, dans lequel la quantité du deuxième composé de catalyseur de type métallocène à ligand volumineux supporté au nombre d'au moins par rapport au poids total du système catalyseur de type métallocène à ligand volumineux supporté et du deuxième composé de catalyseur de type métallocène à ligand volumineux supporté au nombre d'au moins un est située dans la plage allant de 0,1 à 60 % en poids.

17. Procédé selon la revendication 13, dans lequel le système catalyseur de type métallocène à ligand volumineux supporté comprend un activateur et un premier composé de catalyseur de type métallocène à ligand volumineux supporté.

18. Procédé selon la revendication 17, dans lequel le premier composé de catalyseur de type métallocène à ligand volumineux supporté est le même que le deuxième composé de catalyseur de type métallocène à ligand volumineux supporté au nombre d'au moins un.